(19) Europäisches Patentamt / European Patent Office / Office européen des brevets

(11) **EP 3 671 308 B1**

(12) **FASCICULE DE BREVET EUROPEEN**

(45) Date de publication et mention
de la délivrance du brevet:
**15.01.2025 Bulletin 2025/03**

(21) Numéro de dépôt: **19218152.7**

(22) Date de dépôt: **19.12.2019**

(51) Classification Internationale des Brevets (IPC):
**G02B 21/18** *(2006.01)*    **G02B 21/36** *(2006.01)*
**G02B 27/14** *(2006.01)*

(52) Classification Coopérative des Brevets (CPC):
**G02B 21/18; G02B 21/361; G02B 27/141**

(54) **PROCÉDÉ D'OBSERVATION D'UN ÉCHANTILLON DANS DEUX BANDES SPECTRALES, ET SELON DEUX GRANDISSEMENTS**

BEOBACHTUNGSVERFAHREN EINER PROBE IN ZWEI SPEKTRALBANDBEREICHEN UND GEMÄSS ZWEI ABBILDUNGSMASSSTÄBEN

METHOD FOR OBSERVING A SAMPLE IN TWO SPECTRAL BANDS, AND ACCORDING TO TWO ENLARGEMENTS.

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.12.2018 FR 1874082**

(43) Date de publication de la demande:
**24.06.2020 Bulletin 2020/26**

(73) Titulaire: **Commissariat à l'Energie Atomique et aux Energies Alternatives**
**75015 Paris (FR)**

(72) Inventeur: **MANDULA, Ondrej**
**38054 GRENOBLE cedex 09 (FR)**

(74) Mandataire: **INNOV-GROUP**
**209 Avenue Berthelot**
**69007 Lyon (FR)**

(56) Documents cités:
**WO-A1-2017/204919      US-A1- 2017 363 849**
**US-A1- 2018 329 195**

## Description

### DOMAINE TECHNIQUE

Le domaine de l'invention est l'imagerie pour observer un échantillon. Plus précisément, l'invention permet de former, sans déplacement de l'échantillon ou d'un système optique, deux images d'un échantillon, avec deux grandissements différents.

### ART ANTERIEUR

La microscopie classique met généralement en oeuvre différents objectifs, définissant différents grandissements, de manière à pouvoir adapter le grandissement selon lequel un échantillon est observé. Il est ainsi possible de privilégier le champ d'observation, en choisissant un grandissement faible, ou la visualisation de détails de l'échantillon, en choisissant un grandissement élevé. Cependant, les microscopes classiques ne permettent pas d'obtenir simultanément deux images d'un même échantillon, selon deux grandissements différents.

Le document WO2017115048 décrit un dispositif et un procédé permettant d'obtenir deux images d'un échantillon respectivement avec et sans grandissement. Dans une configuration, l'échantillon est déplacé selon deux positions différentes. Dans une autre configuration, on forme simultanément deux images, représentant deux parties différentes de l'échantillon.

Le document WO2018060619 décrit un dispositif permettant d'observer un échantillon selon une configuration d'imagerie sans lentille, le champ observé étant élevé. Cela permet de sélectionner une zone du champ observé. Le dispositif permet ensuite de former un zoom de la zone sélectionnée avec une modalité d'imagerie classique, mettant en oeuvre un objectif. Le passage entre l'image effectuée selon un grand champ d'observation et la partie zoomée de l'image nécessite un déplacement soit de l'échantillon, soit de l'objectif. Ce dispositif ne permet pas d'observer simultanément une même partie de l'échantillon.

Le document US20180329195 décrit un dispositif permettant de former deux images d'un échantillon, de même grandissement, dans deux bandes spectrales différentes.

L'invention vise à remédier aux limites des documents précédemment décrits. Elle permet notamment de former simultanément deux images d'une même partie d'un échantillon, respectivement selon deux grandissements différents.

### EXPOSE DE L'INVENTION

Un premier objet de l'invention est un dispositif pour observer un échantillon selon la revendication 1.

Ainsi, selon l'invention, le capteur d'image est apte à acquérir une image représentative de la première composante d'intérêt, détectée par le premier groupe de pixels, et de la deuxième composante d'intérêt, détectée par le deuxième groupe de pixels.

Par canal optique, on entend un espace à travers lequel se propage une onde lumineuse. Un canal optique peut comporter des éléments optiques, par exemple un filtre ou une lentille ou un objectif.

Les termes amont/aval s'étendent selon le sens de propagation de la lumière.

Le dispositif peut comporter l'une quelconque des caractéristiques suivantes, prises isolément ou selon des combinaisons techniquement réalisables :

- Le dispositif comporte une unité de traitement, programmée pour former :

  · une première image à partir du premier groupe de pixels;
  · une deuxième image à partir du deuxième groupe de pixels.

- Le dispositif comporte un objectif corrigé à l'infini, disposé entre le plan support et le premier séparateur, ainsi que :

  · une première lentille de tube, s'étendant dans le premier canal optique, la première lentille de tube formant, avec l'objectif, le premier système optique;
  · une deuxième lentille de tube, s'étendant dans le deuxième canal optique, la deuxième lentille de tube formant, avec l'objectif, le deuxième système optique.

- Le premier séparateur comporte une lame semi-réfléchissante et/ou le deuxième séparateur comporte une lame semi-réfléchissante.
- Le deuxième canal optique comporte des miroirs, de façon à diriger la deuxième composante, réfléchie par le premier séparateur, jusqu'au deuxième séparateur.
- Le plan support délimite deux demi-espaces, de telle sorte que :

  · la source de lumière et le capteur d'image appartiennent respectivement à deux sous-espaces différents ;
  · ou la source de lumière et le capteur d'image appartiennent au même sous-espace.

- Le premier grandissement est strictement supérieur ou strictement inférieur au deuxième grandissement.

Un deuxième objet de l'invention est un procédé d'observation d'un échantillon à l'aide d'un dispositif selon le premier objet de l'invention, le procédé comportant :

- disposition de l'échantillon sur le support;
- illumination de l'échantillon à l'aide de la source de lumière;
- acquisition d'une image par le capteur d'image;
- à partir de l'image acquise, formation d'une première image de l'échantillon, à l'aide du premier groupe de pixels et formation d'une deuxième image de l'échantillon, à l'aide du deuxième groupe de pixels;

de telle sorte que :

- la première image représente l'échantillon, selon le premier grandissement défini par le premier système optique;
- la deuxième image représente l'échantillon selon le deuxième grandissement défini par le deuxième système optique.

Selon un mode de réalisation,

- le premier système optique définit un premier plan objet et un premier plan image, et l'échantillon s'étend selon un plan d'échantillon;
- le capteur d'image définit un plan de détection;

le procédé étant tel que :

  - le plan d'échantillon est décalé par rapport au premier plan objet selon une première distance de défocalisation objet inférieure à 1 mm ;
  - et/ou le plan de détection est décalé par rapport au premier plan image selon une première distance de défocalisation image inférieure à 1 mm ;

de telle sorte que la première image est une image défocalisée de l'échantillon.

Le procédé peut comprendre une reconstruction d'une image complexe de la première composante à partir de la première image défocalisée.

Par plan image et plan objet, on entend des plans conjugués par le système optique.

Selon un mode de réalisation :

- le deuxième système optique définit un deuxième plan objet et un deuxième plan image, et l'échantillon s'étend selon un plan d'échantillon;
- le capteur d'image définit un plan de détection;

le procédé étant tel que :

  - le plan d'échantillon est décalé par rapport au deuxième plan objet selon une deuxième distance de défocalisation objet inférieure à 1 mm ;
  - et/ou le plan de détection est décalé par rapport au deuxième plan image selon une deuxième distance de défocalisation image inférieure à 1 mm ;

de telle sorte que la deuxième image est une image défocalisée de l'échantillon.

Le procédé peut comprendre une reconstruction d'une image complexe de la deuxième composante à partir de la deuxième image défocalisée.

Selon un mode de réalisation, la source de lumière émet simultanément une onde lumineuse incidente dans la première bande spectrale et dans la deuxième bande spectrale, de telle sorte que la première image et la deuxième image sont formées simultanément, à partir d'une même image acquise par le capteur d'image.

Selon un mode de réalisation, la source de lumière émet successivement une onde lumineuse incidente dans la première bande spectrale et dans la deuxième bande spectrale, de telle sorte que la première image et la deuxième image sont formées successivement, notamment à partir de deux images successivement acquises par le capteur d'image.

D'autres avantages et caractéristiques ressortiront plus clairement de la description qui va suivre de modes particuliers de réalisation de l'invention, donnés à titre d'exemples non limitatifs, et représentés sur les figures listées ci-dessous.

## FIGURES

La figure 1A représente un exemple de dispositif selon l'invention, selon une configuration de transmission.

La figure 1B représente une variante de la figure 1A.

La figure 1C représente un exemple de dispositif selon l'invention, selon une configuration de réflexion.

La figure 1D est une variante de la configuration représentée sur la figure 1A.

La figure 1E est une représentation d'un capteur d'image.

La figure 2A montre un exemple d'image acquise par un dispositif tel que représenté sur la figure 1A, l'échantillon observé étant une mire.

La figure 2B est une première image, formée à partir d'un premier groupe de pixels de l'image représentée sur la figure 2A.

La figure 2C est une deuxième image, formée à partir d'un deuxième groupe de pixels de l'image représentée sur la figure 2A.

La figure 3A montre une première image, formée à partir d'une image acquise par un dispositif tel que représenté sur la figure 1A. L'échantillon observé est un milieu liquide comportant des spermatozoïdes.

La figure 3B montre une deuxième image de l'échantillon comportant des spermatozoïdes, formée à partir d'une image acquise par un dispositif tel que représenté sur la figure 1A.

La figure 3C est un détail de la figure 3A.

La figure 3D est un détail de la figure 3B.

## EXPOSE DE MODES DE REALISATION PARTICULIERS

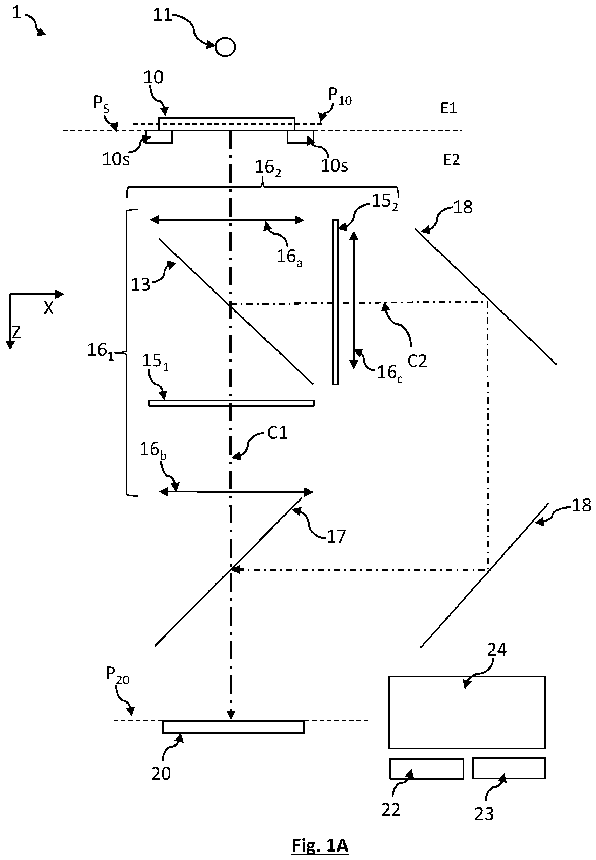

On a représenté sur la figure 1A un dispositif 1 selon l'invention. Le dispositif comporte une source de lumière 11. La source de lumière 11 est configurée pour émettre une onde lumineuse, dite onde lumineuse incidente 12, se propageant jusqu'à un échantillon 10. L'échantillon 10 est disposé sur un support d'échantillon 10s. Un premier système optique $16_1$ s'étend entre un capteur d'image 20 et l'échantillon 10. Le premier système optique $16_1$ définit un premier grandissement $G_1$. Un deuxième système optique $16_2$ s'étend entre le capteur d'image 20 et l'échantillon 10. Le deuxième système optique $16_2$ définit un deuxième grandissement $G_2$. Un objectif de l'invention est de former, au niveau du capteur d'image 20, différentes images d'une même partie de l'échantillon, respectivement selon différents grandissements, et cela de préférence simultanément.

La source de lumière 11 peut être une source de lumière blanche, ou être composée de sources de lumière élémentaires, chaque source élémentaire émettant selon différentes bandes spectrales. La source de lumière est configurée pour émettre l'onde lumineuse incidente 12 selon au moins une première bande spectrale $\Delta_1$ et une deuxième bande spectrale $\Delta_2$. La première bande spectrale $\Delta_1$ et la deuxième bande spectrale $\Delta_2$ peuvent être émises simultanément, ce qui correspond à une configuration préférée. C'est notamment le cas lorsque la source de lumière est une source de lumière blanche, ou, de façon générale, lorsque la source de lumière émet selon une bande spectrale $\Delta$ englobant la première bande spectrale $\Delta_1$ et la deuxième bande spectrale $\Delta_2$. La source de lumière est par exemple une source de type LED (diode électroluminescente - light emitting diode).

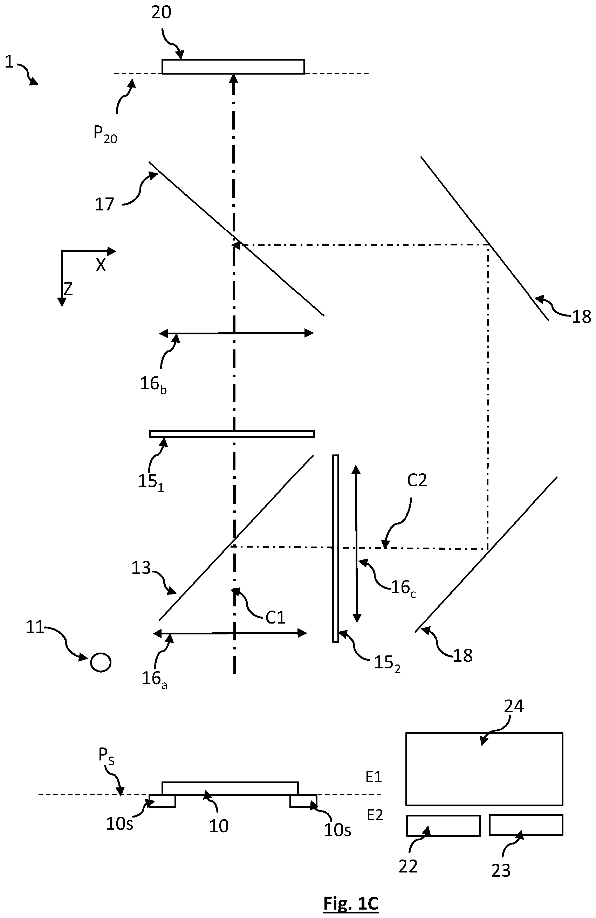

La configuration représentée sur la figure 1A est une configuration dite en transmission, dans laquelle l'échantillon est disposé entre la source de lumière 11 et le capteur d'image 20. Le support d'échantillon 10s est configuré pour former un plan support $P_S$, selon lequel ou sur lequel s'étend l'échantillon 10 lorsqu'il est disposé sur le support 10s. Selon la configuration en transmission, le plan support $P_S$ délimite deux demi-espaces E1 et E2. La source de lumière 11 appartient à un demi-espace E1 tandis que le capteur d'image 20 appartient à l'autre demi-espace E2. Une configuration en réflexion, selon laquelle la source de lumière 11 et le capteur d'image 20 appartiennent à un même demi-espace E1, est représentée sur la figure 1C.

Sous l'effet de l'illumination par l'onde lumineuse incidente 12 émise par la source de lumière 11, l'échantillon 10 transmet une onde lumineuse 14, dite onde lumineuse d'intérêt, cette dernière se propageant vers le capteur d'image 20, parallèlement à un premier axe de propagation Z. L'échantillon 10 doit être suffisamment transparent ou translucide de façon à ce que l'onde lumineuse d'intérêt 14 soit exploitable.

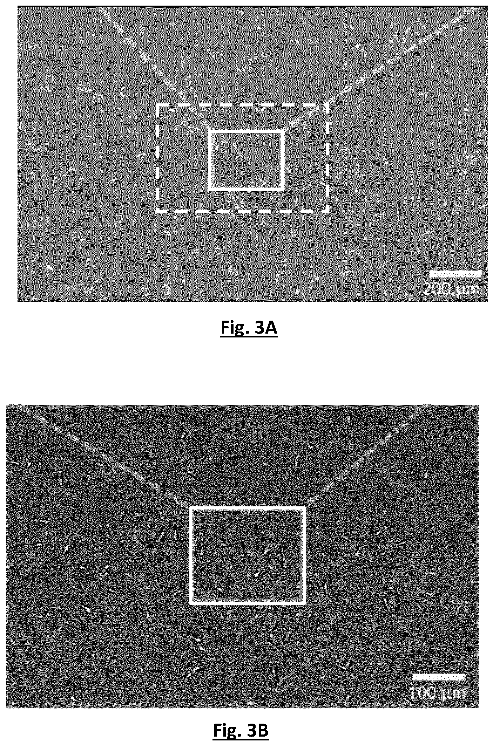

L'échantillon 10 peut être un liquide, par exemple un liquide biologique comportant des particules. Le terme particule désigne par exemple des particules biologiques, par exemple des cellules ou microorganismes. Il peut également désigner des gouttelettes d'une émulsion, ou des microbilles utilisées dans certains protocoles biologiques. Il peut également désigner des bulles d'air ou d'un autre gaz baignant dans un milieu liquide ou solide. Il peut également désigner des particules liquides ou solides en suspension dans un gaz. Généralement, la dimension des particules est micrométrique ou millimétrique. Cela signifie que les particules sont inscrites dans un disque ou une sphère dont le rayon est inférieur ou égal à quelques microns, typiquement 10 $\mu$m ou 100 $\mu$m ou quelques millimètres, par exemple 1 ou 2 mm. Dans un exemple d'application, cf. figures 3A à 3D, les particules sont des spermatozoïdes. D'autres exemples de particules peuvent être des particules sanguines, par exemple des globules blancs ou des globules rouges. L'échantillon peut également comporter des cellules baignant dans un milieu de culture.

L'échantillon peut également être solide. Il peut s'agir d'un extrait sec d'un liquide biologique, par exemple du sang. Il peut également s'agir d'une fine lame de tissu, de type lame d'anatomopathologie. Dans ce cas, la lame est suffisamment fine pour pouvoir être observée en transmission. L'épaisseur peut notamment être comprise entre 10 $\mu$m et 100 $\mu$m.

L'échantillon peut également être un milieu de culture, de type gélose, sur lequel se développent des bactéries ou des colonies bactériennes.

De préférence, l'onde lumineuse incidente 12 illumine une surface d'échantillon supérieure à 1 mm$^2$. La surface d'échantillon illuminée peut être comprise entre 1 mm$^2$ et 30 ou 40 mm$^2$. Cela permet d'observer l'échantillon selon un grand champ d'observation.

Le dispositif 1 comporte un premier séparateur 13, de type lame semi-réfléchissante, configuré pour transmettre une première composante $14_1$ de l'onde lumineuse d'intérêt 14 parallèlement au premier axe de propagation Z. Par exemple, le premier séparateur 13 permet de transmettre 50% de l'onde lumineuse d'intérêt 14 selon le premier axe de propagation Z. Par transmettre, on entend que l'onde lumineuse se propage, en amont et en aval de l'échantillon, selon un même axe de propagation. Le premier séparateur 13 réfléchit une deuxième composante $14_2$ de l'onde lumineuse d'intérêt 14 transversalement à l'axe Z, et par exemple selon un deuxième axe X perpendiculaire au premier axe Z. Dans l'exemple représenté, la deuxième composante $14_2$ de l'onde lumineuse d'intérêt 14, réfléchie selon un deuxième axe X, correspond à 50% de l'onde lumineuse d'intérêt 14. Dans cet exemple, le deuxième axe X est perpendiculaire au premier axe Z.

Le dispositif 1 est configuré de telle sorte que les première et deuxième composantes de l'onde lumineuse d'intérêt se propagent, en aval du premier séparateur, respectivement selon la première bande spectrale $\Delta_1$ et selon la deuxième bande spectrale $\Delta_2$. Les termes amont/aval sont à interpréter selon le sens de propagation de la lumière, de la source de lumière 11 vers le capteur d'image 20. Le dispositif 1 comporte un premier filtre spectral $15_1$, et un deuxième filtre spectral $15_2$, disposés en aval du premier séparateur 13. Dans cet exemple, le premier filtre $15_1$ et le deuxième filtre $15_2$ sont des filtres passe-bande, de façon à ne transmettre que respectivement la première bande spectrale $\Delta_1$ et la deuxième bande spectrale $\Delta_2$. Ainsi :

- en aval du premier filtre $15_1$, la première composante $14_1$ de l'onde lumineuse d'intérêt 14 s'étend selon la première bande spectrale $\Delta_1$ ;
- en aval du deuxième filtre $15_2$, la deuxième composante $14_2$ de l'onde lumineuse d'intérêt 14 s'étend selon la deuxième bande spectrale $\Delta_2$.

La largeur de bande de la première bande spectrale $\Delta_1$ et de la deuxième bande spectrale $\Delta_2$ est de préférence inférieure ou égale à 100 nm, voire à 50 nm. Par largeur de bande, on entend la largeur à mi-hauteur d'une bande spectrale. De préférence, la première bande spectrale $\Delta_1$ et la deuxième bande spectrale $\Delta_2$ ne se recoupent pas, ou de façon marginale. Cela signifie qu'en cas de recoupement, moins de 5% ou moins de 1% de l'intensité de chaque composante se trouve dans la plage de recoupement.

Dans l'exemple représenté sur les figures 1A à 1D :

- la première bande spectrale $\Delta_1$ est centrée sur la longueur d'onde 630 nm, dans le domaine spectral bleu et présente une largeur spectrale de 20 nm ou 40 nm ;
- la deuxième bande spectrale $\Delta_2$ est centrée sur la longueur d'onde 450 nm, dans le domaine spectral rouge et présente une largeur spectrale de de 20 nm ou 40 nm.

Le dispositif 1 comporte un premier système optique $16_1$ définissant un premier grandissement $G_1$. Le premier grandissement peut être inférieur ou supérieur à 1, ou égal à 1. Dans les exemples représentés sur les figures 1A à 1D, le premier système optique $16_1$ est subdivisé en un premier composant optique $16_a$ est un deuxième composant optique $16_b$. Le premier composant optique est un objectif (ou une lentille) corrigé à l'infini, c'est-à-dire placé selon une configuration foyer infini. Il est disposé en amont du premier séparateur 13. En aval de l'objectif $16_a$, l'onde lumineuse d'intérêt 14 est formée de faisceaux parallèles au premier axe de propagation Z. Le deuxième composant optique $16_b$ est, dans cet exemple, une lentille de tube. Le grandissement du premier système optique $16_1$, également désigné par le terme premier grandissement, dépend de la focale de la lentille de tube $16_b$. Par exemple, en utilisant une lentille de tube de focale $f_1 = 75$ mm (première distance focale), le grandissement du premier système optique $16_1$ est égal à 4. En utilisant une focale plus courte, le premier grandissement baisse. En utilisant une focale plus longue, le premier grandissement augmente. La lentille de tube $16_b$ peut être amovible, ce qui permet un ajustement du premier grandissement $G_1$.

Le dispositif 1 comporte un deuxième système optique $16_2$, définissant un deuxième grandissement $G_2$, de préférence différent du premier grandissement $G_1$. Dans les exemples représentés sur les figures 1A à 1D, le deuxième système optique $16_2$ comporte le premier composant optique $16_a$ précédemment décrit (objectif corrigé à l'infini) et ainsi qu'un troisième composant optique $16_c$, ce dernier étant également une lentille de tube. Il s'agit d'une lentille de tube de focale $f_2$=200 mm (deuxième distance focale). Ainsi, le deuxième système optique $16_2$ présente un deuxième grandissement $G_2$ égal à 11.

Le fait que les premier et deuxième systèmes optiques $16_1$, $16_2$ soient chacun formés par une association d'objectif corrigé à l'infini et d'une lentille de tube permet de disposer des composants optiques entre l'objectif et chaque lentille de tube. Il s'agit dans cet exemple du premier séparateur 13 et de filtres $15_1$ et $15_2$.

Le dispositif 1 comporte un deuxième séparateur 17, disposé entre le premier système optique $16_1$ et le capteur d'image 20. Le deuxième séparateur 17 est également disposé entre le premier séparateur 13 et le capteur d'image 20. Le deuxième séparateur 17 peut être similaire au premier séparateur 13. Le deuxième séparateur 17 transmet une proportion, par exemple 50%, de la première composante $14_1$ de l'onde lumineuse d'intérêt 14, transmise par le premier séparateur 13 et se propageant selon le premier axe de propagation Z. Le deuxième séparateur 17 réfléchit, vers le capteur d'image 20, une proportion, par exemple 50%, de la deuxième composante $14_2$ de l'onde lumineuse d'intérêt 14. Le deuxième séparateur 17 est configuré de telle sorte qu'en aval de ce dernier, les première et deuxième composantes de l'onde lumineuse d'intérêt se propagent parallèlement l'une à l'autre, autour d'un même axe de propagation, en l'occurrence l'axe Z, jusqu'au capteur d'image 20. Ainsi, en aval du deuxième séparateur 17, les première et deuxième composantes de l'onde lumineuse d'intérêt sont coaxiales.

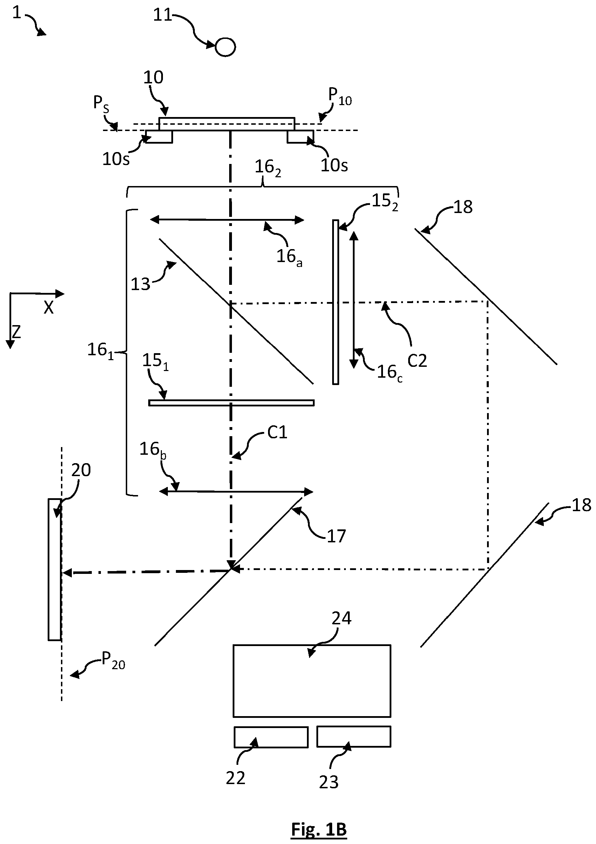

Selon une variante représentée sur la figure 1B, le deuxième séparateur 17 :

- réfléchit tout ou partie de la première composante $14_1$ de l'onde lumineuse d'intérêt 14 vers le capteur d'image 20 ;
- transmet tout ou partie de la deuxième composante $14_2$ de l'onde lumineuse d'intérêt 14 vers le capteur d'image 20.

Ainsi, en aval du deuxième séparateur 17, les première et deuxième composantes de l'onde lumineuse d'intérêt se propagent jusqu'au capteur d'image 20 selon le même axe de propagation, en l'occurrence l'axe X.

Le dispositif 1 définit, entre le premier séparateur 13 et le deuxième séparateur 17 :

- un premier canal optique C1, s'étendant dans cet exemple parallèlement à l'axe Z, et dans lequel se propage, la première composante $14_1$ de l'onde lumineuse d'intérêt 14 ;
- un deuxième canal optique C2, dans lequel se propage la deuxième composante $14_2$ de l'onde lumineuse d'intérêt 14.

Dans les exemples représentés sur les figures 1A à 1D, le deuxième canal optique C2 est formé par des miroirs 18, agencés pour réfléchir la deuxième composante $14_2$ de l'onde lumineuse d'intérêt 14 du premier séparateur 13 vers le deuxième séparateur 17 sans passer par le premier système optique $16_1$. Autrement dit, le deuxième canal optique C2 contourne le premier système optique $16_1$.

D'une façon générale :

- le premier canal optique $C_1$ est configuré pour filtrer spectralement la première composante $14_1$ de l'onde lumineuse d'intérêt, dans la première bande spectrale $\Delta_1$, et pour conférer, à la première composante $14_1$, un premier grandissement $G_1$ ;
- le deuxième canal optique $C_2$ est configuré pour filtrer spectralement la deuxième composante $14_2$ de l'onde lumineuse d'intérêt, dans la deuxième bande spectrale $\Delta_2$, et pour conférer, à la deuxième composante $14_2$ un deuxième grandissement $G_2$.

Du fait du filtrage spectral effectué par le premier filtre $15_1$ et par le deuxième filtre $15_2$, les première et deuxième composantes de l'onde lumineuse d'intérêt 14 atteignent le deuxième séparateur 17 en s'étendant respectivement selon la première bande spectrale $\Delta_1$ et la deuxième bande spectrale $\Delta_2$.

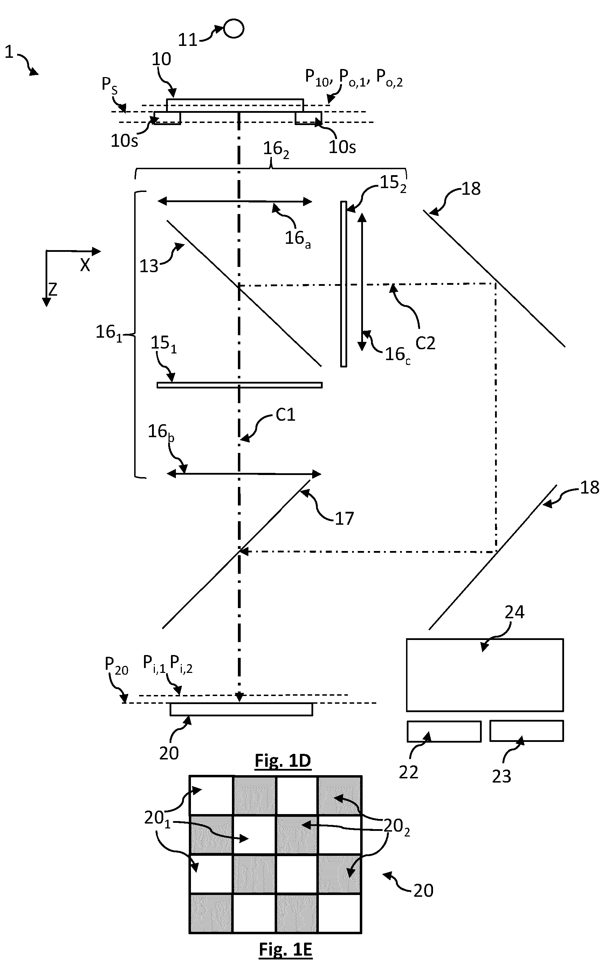

Le capteur d'image 20 est disposé en aval du deuxième séparateur 17. Il reçoit les première et deuxième composantes de l'onde lumineuse d'intérêt 14. Le capteur d'image est un capteur polychrome comportant une matrice de pixels. Il s'agit par exemple d'un capteur de type CCD ou CMOS. Les pixels sont disposés selon un plan de détection $P_{20}$. Comme représenté sur la figure 1E, le capteur d'image comporte un premier groupe $20_1$ de pixels sensibles à la première bande spectrale $\Delta_1$ et un deuxième groupe de pixels $20_2$ sensibles à la deuxième bande spectrale $\Delta_2$. Le capteur d'image peut comporter d'autres groupes de pixels, sensibles à une bande spectrale différente de la première bande spectrale $\Delta_1$ et de la deuxième bande spectrale $\Delta_2$. Le premier groupe de

pixels $20_1$ est considéré comme n'étant pas sensible à la deuxième bande spectrale $\Delta_2$. De même, le deuxième groupe de pixels $20_2$ est considéré comme n'étant pas sensible à la première bande spectrale $\Delta_1$. Par exemple, le capteur d'image 20 comporte un filtre de Bayer, de façon à ce que le premier groupe de pixels $20_1$ soit sensible à la bande spectrale rouge et qu'un deuxième groupe de pixels $20_2$ soit sensible à la bande spectrale bleue. Il comporte alors un troisième groupe de pixels, sensibles à la bande spectrale verte, et qui n'est pas utilisé. De préférence, le premier groupe de pixel $20_1$ est au moins 5 à 10 fois plus sensible à la première bande spectrale $\Delta_1$ qu'à la deuxième bande spectrale $\Delta_2$. Réciproquement, le deuxième groupe de pixel $20_2$ est au moins 5 à 10 fois plus sensible à la deuxième bande spectrale $\Delta_2$ qu'à la première bande spectrale $\Delta_1$.

Le capteur d'image 20 est disposé à la première distance focale (75 mm) du premier système optique $16_1$ et à une deuxième distance focale (200 mm) du deuxième système optique $16_2$. On comprend que le recours à un premier canal optique $C_1$ et à un deuxième canal optique $C_2$ permet de placer le capteur d'image 20 respectivement à la première distance focale du premier système optique $16_1$ et à la deuxième distance focale du deuxième système optique $16_2$. La distance entre le capteur d'image et chaque système optique est ajustée selon leur distance focale respective.

Chaque image I acquise par le capteur d'image peut comporter simultanément :

- l'information relative à la première composante $14_1$ de l'onde lumineuse d'intérêt, dans la première bande spectrale $\Delta_1$, répartie dans le premier groupe de pixels $20_1$ ;
- l'information relative à la deuxième composante $14_2$ de l'onde lumineuse d'intérêt, dans la deuxième bande spectrale $\Delta_2$, répartie dans le deuxième groupe de pixels $20_2$.

Le capteur d'image est relié à une unité de traitement 22, par exemple un microprocesseur, reliée à une mémoire 23 et à écran 24. L'unité de traitement 22 ou le capteur d'image 20 est configuré pour former une première image $I_1$, à partir de l'information collectée par le premier groupe de pixels $20_1$. La première image $I_1$ permet d'observer l'échantillon selon le premier grandissement $G_1$. L'unité de traitement 22 ou le capteur d'image 20 est configuré pour former une deuxième image $I_2$ à partir de l'information collectée par le deuxième groupe de pixels $20_2$. La deuxième image permet $I_2$ d'observer l'échantillon selon le deuxième grandissement $G_2$.

Ainsi, le premier canal optique $C_1$ permet au capteur d'image 20 de former une première image $I_1$ de l'échantillon, selon la première bande spectrale $\Delta_1$. Cela permet une représentation de l'échantillon 20 selon le premier grandissement $G_1$. Le deuxième canal optique $C_2$ permet au capteur d'image 20 de former une deuxième image $I_2$ de l'échantillon, selon la deuxième bande spectrale. Cela permet une représentation de l'échantillon selon le deuxième grandissement $G_2$.

Ainsi, l'invention permet de former, simultanément, avec un même capteur d'image, deux images de l'échantillon respectivement selon deux grandissements différents, sans déplacement de l'échantillon, ou d'un élément composant le dispositif : ni le capteur d'image, ni l'échantillon, ni les systèmes optiques ne sont déplacés. Cela provient du fait que les deux images $I_1$ et $I_2$ sont formées à partir d'une même image acquise I. Dans l'exemple représenté ci-dessus, le premier grandissement $G_1$ est inférieur au deuxième grandissement $G_2$. Ainsi, sur une première image $I_1$, on privilégie le champ d'observation, tandis que sur la deuxième image $I_2$, on privilégie l'observation de détails dans le champ d'observation de la première image $I_1$.

La formation simultanée de deux images constitue un mode de réalisation préféré. Il n'est cependant pas nécessaire que les deux images soient formées à partir d'une même image acquise I. Les deux images peuvent être formées à partir d'images I acquises séquentiellement si l'échantillon est illuminé séquentiellement selon tout ou partie de la première bande spectrale $\Delta_1$ ou de la deuxième bande spectrale $\Delta_2$.

Selon un mode de réalisation, représenté sur la figure 1C, l'échantillon 10 est observé selon une configuration en réflexion. Selon cette configuration, la source de lumière 10 est disposée dans le même demi-espace E1 que le capteur d'image 20, le demi-espace étant limité par le plan support $P_S$. Selon ce mode de réalisation, l'échantillon est soit réfléchissant, soit disposé sur un support réfléchissant. Lorsque l'échantillon est réfléchissant, la réflexion peut être obtenue à la surface de l'échantillon, ou à l'intérieur de ce dernier, par rétrodiffusion. Ainsi, l'onde lumineuse d'intérêt 14, à laquelle est exposé le capteur d'image 20, est une onde réfléchie soit au niveau de la surface de l'échantillon, soit dans l'échantillon, soit par le support réfléchissant 10s sur lequel l'échantillon est disposé.

Selon un mode de réalisation représenté sur la figure 1D, la première et/ou la deuxième image sont acquises selon une configuration défocalisée. Chaque système optique $16_1$ ou $16_2$ définit respectivement un plan image et un plan objet. Dans une configuration de mise au point, le plan objet correspond à un plan $P_{10}$ dans lequel s'étend l'échantillon 10 et le plan image correspond au plan de détection $P_{20}$ défini par le capteur d'image. Selon la configuration défocalisée :

- le plan image $P_{i,1}$ du premier système optique $16_1$ est décalé du plan de détection $P_{20}$ selon une première distance de défocalisation image $d_{i,1}$, et/ou le plan objet $P_{0,1}$ du premier système optique est décalé du plan de l'échantillon $P_{10}$ selon une première distance de défocalisation objet $d_{o,1}$; et/ou
- le plan image $P_{i,2}$ du deuxième système optique $16_2$ est décalé du plan de détection $P_{20}$ selon une deuxième distance de défocalisation image $d_{i,2}$, et/ou le plan objet $P_{o,2}$ du deuxième système optique est décalé du plan de l'échantillon $P_{10}$ selon une deuxième distance de défocalisation objet $d_{o,2}$.

Dans l'exemple représenté sur la figure 1D, seuls les premier et deuxième plans image $P_{i,1}$ et $P_{i,2}$ sont décalés par rapport au plan de détection $P_{20}$. Les premier et deuxième plans objet $P_{o,1}$ et $P_{o,2}$ correspondent au plan $P_{10}$ selon lequel s'étend l'échantillon 10.

Généralement, une distance de défocalisation est inférieure à 1 mm, et de préférence inférieure à 500 $\mu$m voire 100 $\mu$m. On parle de configuration légèrement défocalisée. Une telle défocalisation est appropriée pour l'observation de particules transparentes, pour lesquelles une image selon une configuration de mise au point n'est pas exploitable.

Une image obtenue selon une configuration défocalisée peut faire l'objet d'une reconstruction holographique. Il s'agit d'appliquer un opérateur de propagation holographique h, modélisant la propagation de la lumière entre le plan de détection $P_{20}$ et un plan de reconstruction, de façon à obtenir une expression complexe A de l'onde lumineuse d'intérêt considérée, qu'il s'agisse de la première composante $14_1$ de l'onde lumineuse d'intérêt ou de la deuxième composante $14_2$ de l'onde lumineuse d'intérêt. Cela peut notamment permettre l'obtention d'une image de phase de l'onde lumineuse d'intérêt considérée. Un exemple de propagateur holographique h est un opérateur de Fresnel, tel que :

$$h(x, y, d) = \frac{1}{j\lambda z} e^{j2\pi \frac{z}{\lambda}} \exp\left(j\pi \frac{x^2 + y^2}{\lambda d}\right)$$

- x, y désignent des coordonnées dans le plan de détection $P_{20}$;
- d représente une distance entre le plan de détection $P_{20}$ et le plan de reconstruction ;
- j est tel que $j^2 = -1$.

De préférence, on peut obtenir une image complexe I* de l'onde lumineuse considérée. L'image complexe correspond à une distribution spatiale de l'expression complexe A de l'onde lumineuse dans le plan de reconstruction.

Par exemple, si le premier système optique $16_1$ est disposé selon une configuration défocalisée, on obtient une première image défocalisée $I_1$, qui représente la première composante $14_1$ de l'onde lumineuse d'intérêt. On peut obtenir une première image complexe reconstruite $I_1$* par une application d'un produit de convolution à la première image $I_1$ de telle sorte que :

$$I_1^* = I_1 * h$$

La première image reconstruite $I_1$* représente la première composante de l'onde lumineuse d'intérêt

$14_1$ dans le plan de reconstruction. Le plan de reconstruction peut par exemple être le plan $P_{10}$ selon lequel s'étend l'échantillon. On peut alors constituer une image de phase de l'échantillon, en calculant l'argument de la première image complexe $I_1^*$.

Ce qui vient d'être explicité est également valable lorsque le deuxième système optique $16_2$ est placé selon une configuration défocalisée. A partir de la deuxième image $I_2$, on peut obtenir une deuxième image complexe $I_2^*$ telle que :

$$I_2^* = I_2 * h$$

De façon alternative, une image complexe peut être obtenue, à partir d'une image acquise selon une configuration défocalisée, en appliquant des algorithmes de reconstruction élaborés. De tels algorithmes sont par exemple décrits dans WO2017162985, et plus précisément dans les étapes 100 à 160 décrites dans ce document.

A partir d'une image complexe, obtenue par reconstruction holographique, on peut obtenir une image exploitable de l'échantillon par une image établie sur la base du module ou de la phase ou de la partie réelle ou de la partie imaginaire de l'image complexe.

On a mis en oeuvre le dispositif tel que représenté sur la figure 1A en utilisant, en guise d'échantillon 10, une mire transparente comportant des marques opaques. L'objectif $16_a$ était un objectif de type Motic 10x/ouverture numérique 0.25. Les lentilles de tubes $16_b$ et $16_c$ étaient celles décrites ci-dessus. Le capteur d'image 20 était un capteur CMOS RGB IDS UI-3160CP-C-HQ 1920 x 1200 pixels - taille de pixels 4.8 $\mu$m. La source de lumière 11 était une LED blanche.

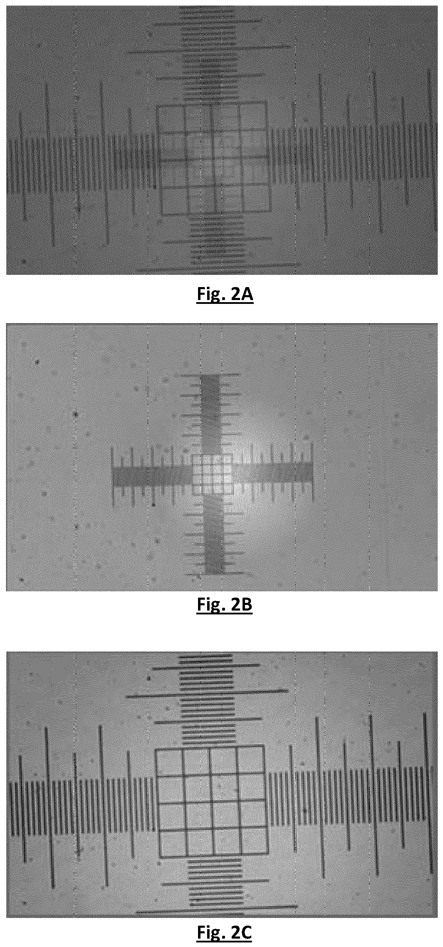

La figure 2A montre une image acquise par le capteur d'image 20, convertie en noir et blanc. Cette image comporte simultanément les pixels du premier groupe de pixels $20_1$, formant la première image $I_1$, juxtaposés aux pixels du deuxième groupe de pixels $20_2$, formant la deuxième image $I_2$.

La figure 2B correspond à la première image $I_1$, formée uniquement à partir des pixels du premier groupe de pixels $20_1$. On peut observer la mire selon un premier grandissement $G_1$. La figure 2C correspond à la deuxième image $I_2$, formée uniquement à partir des pixels du deuxième groupe de pixels $20_2$. On peut observer la mire selon un deuxième grandissement $G_2$, ce dernier étant supérieur au premier grandissement.

Le dispositif a été mis en oeuvre sur un échantillon comportant des spermatozoïdes. On sait que la caractérisation des spermatozoïdes est une application courante. Le document WO2014021031 décrit par exemple un exemple de suivi du mouvement (tracking) de spermatozoïdes par imagerie sans lentille. L'analyse de spermatozoïdes suppose un suivi de la trajectoire de chaque spermatozoïde, de façon à déterminer le type de trajectoire et/ou la vitesse de déplacement. Cela exige un champ d'observation important, si l'on souhaite éviter de déplacer le capteur d'image ou l'échantillon. L'analyse de spermatozoïdes peut également comprendre une analyse de la morphologie des spermatozoïdes observés, ou de certains d'entre eux. Il s'agit alors de détecter d'éventuelles anomalies morphologiques, par exemple une malformation. Cela suppose une représentation précise des spermatozoïdes, avec un grandissement élevé.

Lors de cet essai, on a acquis, à l'aide du capteur d'image 20, des images I selon une fréquence d'acquisition élevée, comprise entre 60 Hz et 100 Hz, de façon à permettre un suivi de la trajectoire de spermatozoïdes, en particulier à l'aide de premières images $I_1$ formées à partir de chaque image acquise I. Les premières images $I_1$ confèrent un champ d'observation élevé, de l'ordre de 3 mm². A partir de chaque image I acquise, on a formé des deuxièmes images $I_2$, permettant d'observer individuellement la morphologie de spermatozoïdes. Le champ d'observation correspondant à chaque deuxième image $I_2$ était de 0.4 mm². Afin d'obtenir un meilleur rendu, le deuxième système optique $16_2$ a été placé selon une configuration légèrement défocalisée, le plan image $P_{I,2}$ du deuxième système optique étant défocalisé de 5 $\mu$m par rapport au plan de détection $P_{20}$. La distance de défocalisation étant faible, il n'a pas été nécessaire d'appliquer un opérateur de reconstruction holographique.

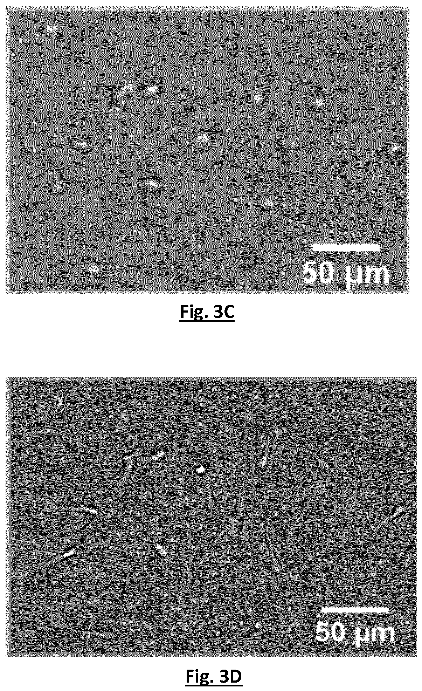

La figure 3A est un exemple de première image $I_1$ formée à partir d'une image acquise par le capteur d'image. Chaque spermatozoïde apparaît sous la forme d'une trace, ce qui permet une localisation suffisamment précise. La figure 3C est un détail de la région d'intérêt encadrée par un trait plein sur la figure 3A. Elle montre que la position des spermatozoïdes peut être déterminée précisément. Ainsi, la première image $I_1$ permet un suivi de la trajectoire (tracking) des spermatozoïdes, lorsque plusieurs images sont séquentiellement acquises. La région d'intérêt représentée, sur la figure 3A, par des pointillés, correspond au champ d'observation de la deuxième image $I_2$. La figure 3B est un exemple de deuxième image $I_2$ formée à partir d'une image acquise par le capteur d'image. La figure 3D est un détail de la région d'intérêt encadrée par un trait plein. La deuxième image $I_2$ permet une représentation suffisamment précise de chaque spermatozoïde pour analyser leur morphologie. L'invention permet ainsi d'effectuer de caractériser simultanément la trajectoire et la morphologie de spermatozoïdes.

Le domaine d'application de l'invention ne se limite pas à l'observation de spermatozoïdes et peut s'appliquer à toute autre cellule, et, de façon plus générale, à la caractérisation de particules en mouvement dans un milieu, qu'il s'agisse d'un milieu liquide ou gazeux. Outre la biologie ou l'aide au diagnostic, le domaine d'application de l'invention peut concerner d'autres domaines, par exemple, et de façon non exhaustive, l'agroalimentaire, le contrôle de fluides ou le contrôle de procédés.

**Revendications**

1. Dispositif (1) pour observer un échantillon (10) comportant :

   • une source de lumière (11), configurée pour émettre une onde lumineuse incidente (12) selon une première bande spectrale ($\Delta_1$) et une deuxième bande spectrale ($\Delta_2$), la première bande spectrale étant différente de la deuxième bande spectrale ;
   • un capteur d'image (20), comportant un premier groupe de pixels ($20_1$), sensibles à la première bande spectrale et un deuxième groupe de pixels ($20_2$), sensibles à la deuxième bande spectrale
   • un support (10s), configuré pour maintenir l'échantillon selon un plan support ($P_s$), le plan support s'étendant entre la source de lumière (11) et le capteur d'image (20), de telle sorte que lorsque l'échantillon est maintenu par le support, sous l'effet d'une illumination par l'onde lumineuse incidente (12), une onde lumineuse d'intérêt (14) se propage vers le capteur d'image, résultant de la propagation de l'onde lumineuse incidente à travers l'échantillon ou de la réflexion de la lumière incidente (12) par l'échantillon ;
   • un premier séparateur (13), disposé entre le plan support ($P_s$) et le capteur d'image (20), de façon à :

      - transmettre une première composante ($14_1$) de l'onde lumineuse d'intérêt, à travers un premier canal optique ($C_1$), le premier canal optique s'étendant jusqu'à un deuxième séparateur (17) ;
      - réfléchir une deuxième composante ($14_2$) de l'onde lumineuse d'intérêt vers un deuxième canal optique ($C_2$), différent du premier canal optique, le deuxième canal optique s'étendant jusqu'au deuxième séparateur (17);

   • un premier filtre ($15_1$) et un deuxième filtre ($15_2$), disposés en aval du premier séparateur (13), pour filtrer respectivement la première composante ($14_1$) selon la première bande spectrale ($\Delta_1$), et la deuxième composante ($14_2$) selon la deuxième bande spectrale ($\Delta_2$); le dispositif comportant également :

      • un premier système optique ($16_1$), définissant un premier grandissement ($G_1$), s'étendant au moins partiellement dans le premier canal optique ($C_1$), et un deuxième système optique ($16_2$), définissant un deuxième grandissement ($G_2$), s'étendant au moins partiellement dans le deuxième canal optique ($C_2$), le premier système optique comportant un composant optique, dans le premier canal optique, entre le premier séparateur et le deuxième séparateur, et le deuxième système optique comportant un composant optique, dans le deuxième canal optique, entre le premier séparateur et le deuxième séparateur ;
      • le deuxième séparateur (17) étant disposé entre le premier séparateur (13) et le capteur d'image (20), et agencé de façon à regrouper la première composante ($14_1$) et la deuxième composante ($14_2$), de telle sorte qu'en aval du deuxième séparateur, la première composante ($14_1$) et la deuxième composante ($14_2$) se propagent jusqu'au capteur d'image (20) parallèlement à un même axe de propagation (Z) ;

   le dispositif étant tel que le premier grandissement ($G_1$) est strictement supérieur ou strictement inférieur au deuxième grandissement ($G_2$).

2. Dispositif selon la revendication 1, comportant une unité de traitement (22), programmée pour former :

   - une première image ($I_1$) à partir du premier groupe de pixels ($20_1$) ;
   - une deuxième image ($I_2$) à partir du deuxième groupe de pixels ($20_2$).

3. Dispositif selon l'une quelconque des revendications précédentes, comportant un objectif ($16_a$) corrigé à l'infini, disposé entre le plan support ($P_S$) et le premier séparateur (13), ainsi que :

   - une première lentille de tube ($16_b$), s'étendant dans le premier canal optique ($C_1$), la première lentille de tube formant, avec l'objectif ($16_a$), le premier système optique ($16_1$) ;
   - une deuxième lentille de tube ($16_c$), s'étendant dans le deuxième canal optique ($C_2$), la deuxième lentille de tube formant, avec l'objectif ($16_a$), le deuxième système optique ($16_2$).

4. Dispositif selon l'une quelconque des revendications précédentes, dans lequel le premier séparateur (13) comporte une lame semi-réfléchissante et/ou dans lequel le deuxième séparateur (17) comporte une lame semi-réfléchissante.

5. Dispositif selon l'une quelconque des revendications précédentes, dans lequel le deuxième canal optique ($C_2$) comporte des miroirs (18), de façon à diriger la deuxième composante ($14_2$), réfléchie par le premier séparateur (13), jusqu'au deuxième séparateur (17).

**6.** Dispositif selon l'une quelconque des revendications précédentes, dans lequel le plan support ($P_s$) délimite deux demi-espaces (E1, E2), de telle sorte que :

- la source de lumière (11) et le capteur d'image (20) appartiennent respectivement à deux sous-espaces différents ;
- ou la source de lumière (11) et le capteur d'image (20) appartiennent au même sous-espace (E1).

**7.** Procédé d'observation d'un échantillon (10) à l'aide d'un dispositif (1) faisant l'objet d'une quelconque des revendications précédentes, le procédé comportant :

- disposition de l'échantillon (10) sur le support ($10_s$);
- illumination de l'échantillon à l'aide de la source de lumière (11);
- acquisition d'une image (I) par le capteur d'image (20);
- à partir de l'image acquise (I), formation d'une première image ($I_1$) de l'échantillon, à l'aide du premier groupe de pixels ($20_1$) et formation d'une deuxième image de l'échantillon ($I_2$), à l'aide du deuxième groupe de pixels ($20_2$);
de telle sorte que
- la première image ($I_1$) représente l'échantillon, selon le premier grandissement ($G_1$) défini par le premier système optique ($16_1$);
- la deuxième image ($I_2$) représente l'échantillon selon le deuxième grandissement ($G_2$) défini par le deuxième système optique ($16_2$).

**8.** Procédé selon la revendication 7, dans lequel :

- le premier système optique ($16_1$) définit un premier plan objet ($P_{o,1}$) et un premier plan image ($P_{i,1}$), et dans lequel l'échantillon (10) s'étend selon un plan d'échantillon ($P_{10}$) ;
- le capteur d'image (20) définit un plan de détection ($P_{20}$) ;
le procédé étant tel que :

- le plan d'échantillon ($P_{10}$) est décalé par rapport au premier plan objet ($P_{o,1}$) selon une première distance de défocalisation objet inférieure à 1 mm ;
- et/ou le plan de détection ($P_{20}$) est décalé par rapport au premier plan image ($P_{i,1}$) selon une première distance de défocalisation image inférieure à 1 mm ;

de telle sorte que la première image ($I_1$) est une image défocalisée de l'échantillon.

**9.** Procédé selon la revendication 8 comportant également une reconstruction d'une image complexe ($I_1^*$) de la première composante ($14_1$) à partir de la première image défocalisée.

**10.** Procédé selon l'une quelconque des revendications 7 à 9, dans lequel :

- le deuxième système optique ($16_2$) définit un deuxième plan objet ($P_{o,2}$) et un deuxième plan image ($P_{i,2}$), et dans lequel l'échantillon s'étend selon un plan d'échantillon ($P_{10}$);
- le capteur d'image (20) définit un plan de détection ($P_{20}$) ;
le procédé étant tel que :

- le plan d'échantillon ($P_{10}$) est décalé par rapport au deuxième plan objet ($P_{O,2}$) selon une deuxième distance de défocalisation objet inférieure à 1 mm ;
- et/ou le plan de détection ($P_{20}$) est décalé par rapport au deuxième plan image ($P_{i,2}$) selon une deuxième distance de défocalisation image inférieure à 1 mm ;

de telle sorte que la deuxième image ($I_2$) est une image défocalisée de l'échantillon.

**11.** Procédé selon la revendication 10, comportant également une reconstruction d'une image complexe ($I_2^*$) de la deuxième composante ($14_2$) à partir de la deuxième image défocalisée.

**12.** Procédé selon l'une quelconque des revendications 7 à 11, dans lequel la source de lumière (11) émet simultanément une onde lumineuse incidente (12) dans la première bande spectrale ($\Delta_1$) et dans la deuxième bande spectrale ($\Delta_2$), de telle sorte que la première image ($I_1$) et la deuxième image ($I_2$) sont formées simultanément, à partir d'une même image (I) acquise par le capteur d'image.

**13.** Procédé selon l'une quelconque des revendications 7 à 11, dans lequel la source de lumière (11) émet successivement une onde lumineuse incidente (12) dans la première bande spectrale ($\Delta_1$) et dans la deuxième bande spectrale ($\Delta_2$), de telle sorte que la première image ($I_1$) et la deuxième image ($I_2$) sont formées successivement à partir de deux images (I) successivement acquises par le capteur d'image.

**Patentansprüche**

**1.** Vorrichtung (1) zum Beobachten einer Probe (10), umfassend:

• eine Lichtquelle (11), die dazu ausgestaltet ist, eine einfallende Lichtwelle (12) gemäß einem

ersten Spektralband ($\Delta_1$) und einem zweiten Spektralband ($\Delta_2$) zu emittieren, wobei das erste Spektralband verschieden von dem zweiten Spektralband ist;

• einen Bildsensor (20), umfassend eine erste Gruppe von Pixeln ($20_1$), die für das erste Spektralband empfindlich sind, und eine zweite Gruppe von Pixeln ($20_2$), die für das zweite Spektralband empfindlich sind

• einen Träger (10s), der dazu ausgestaltet ist, die Probe gemäß einer Trägerebene ($P_s$) zu halten, wobei sich die Trägerebene zwischen der Lichtquelle (11) und dem Bildsensor (20) erstreckt, so dass sich, wenn die Probe von dem Träger gehalten wird, unter der Wirkung einer Beleuchtung durch die einfallende Lichtwelle (12) eine Lichtwelle von Interesse (14) zu dem Bildsensor hin ausbreitet, die aus der Ausbreitung der einfallenden Lichtwelle durch die Probe hindurch oder aus der Reflexion des einfallenden Lichts (12) durch die Probe resultiert;

• einen ersten Separator (13), der zwischen der Trägerebene ($P_s$) und dem Bildsensor (20) derart angeordnet ist, dass:

- eine erste Komponente ($14_1$) der Lichtwelle von Interesse durch einen ersten optischen Kanal ($C_1$) hindurch transmittiert wird, wobei sich der erste optische Kanal bis zu einem zweiten Separator (17) erstreckt;
- eine zweite Komponente ($14_2$) der Lichtwelle von Interesse zu einem zweiten optischen Kanal ($C_2$) reflektiert wird, der von dem ersten optischen Kanal verschieden ist, wobei sich der zweite optische Kanal bis zu dem zweiten Separator (17) erstreckt;

• ein erstes Filter ($15_1$) und ein zweites Filter ($15_2$), die stromab des ersten Separators (13) angeordnet sind, um die erste Komponente ($14_1$) gemäß dem ersten Spektralband ($\Delta_1$) beziehungsweise die zweite Komponente ($14_2$) gemäß dem zweiten Spektralband ($\Delta_2$) zu filtern;

wobei die Vorrichtung ferner umfasst:

• ein erstes optisches System ($16_1$), eine erste Vergrößerung ($G_1$) definierend, das sich mindestens teilweise in dem ersten optischen Kanal ($C_1$) erstreckt, und ein zweites optisches System ($16_2$), eine zweite Vergrößerung ($G_2$) definierend, das sich mindestens teilweise in dem zweiten optischen Kanal ($C_2$) erstreckt, wobei das erste optische System eine optische Komponente, in dem ersten optischen Kanal, zwischen dem ersten Separator und dem zweiten Separator umfasst und wobei das zweite optische System eine optische Komponente, in dem zweiten optischen Kanal, zwischen dem ersten Separator und dem zweiten Separator umfasst;

• wobei der zweite Separator (17) zwischen dem ersten Separator (13) und dem Bildsensor (20) angeordnet ist und derart gestaltet ist, dass die erste Komponente ($14_1$) und die zweite Komponente ($14_2$) gruppiert werden, so dass sich stromab des zweiten Separators die erste Komponente ($14_1$) und die zweite Komponente ($14_2$) bis zu dem Bildsensor (20) parallel zu einer selben Ausbreitungsachse (Z) ausbreiten;

wobei die Vorrichtung dergestalt ist, dass die erste Vergrößerung ($G_1$) strikt größer oder strikt kleiner als die zweite Vergrößerung ($G_2$) ist.

2. Vorrichtung nach Anspruch 1, umfassend eine Verarbeitungseinheit (22), die dazu programmiert ist, zu bilden:

- ein erstes Bild ($I_1$) ausgehend von der ersten Gruppe von Pixeln ($20_1$),
- ein zweites Bild ($I_2$) ausgehend von der zweiten Gruppe von Pixeln ($20_2$).

3. Vorrichtung nach einem der vorhergehenden Ansprüche, umfassend ein unendlich-korrigiertes Objektiv ($16_a$), das zwischen der Trägerebene ($P_S$) und dem ersten Separator (13) angeordnet ist, sowie:

- eine erste Tubuslinse ($16_b$), die sich in dem ersten optischen Kanal ($C_1$) erstreckt, wobei die erste Tubuslinse mit dem Objektiv ($16_a$) das erste optische System ($16_1$) bildet;
- eine zweite Tubuslinse ($16_b$), die sich in dem zweiten optischen Kanal ($C_2$) erstreckt, wobei die zweite Tubuslinse mit dem Objektiv ($16_a$) das zweite optische System ($16_2$) bildet.

4. Vorrichtung nach einem der vorhergehenden Ansprüche, wobei der erste Separator (13) ein halbreflektierendes Plättchen umfasst und/oder wobei der zweite Separator (17) ein halbreflektierendes Plättchen umfasst.

5. Vorrichtung nach einem der vorhergehenden Ansprüche, wobei der zweite optische Kanal ($C_2$) Spiegel (18) umfasst, so dass die zweite Komponente ($14_2$), die von dem ersten Separator (13) reflektiert wird, bis zu dem zweiten Separator (17) geleitet wird.

6. Vorrichtung nach einem der vorhergehenden Ansprüche, wobei die Trägerebene ($P_s$) zwei Halbräu-

me (E1, E2) begrenzt, so dass:

- die Lichtquelle (11) und der Bildsensor (20) zwei verschiedenen Teilräumen angehören;
- oder die Lichtquelle (11) und der Bildsensor (20) demselben Teilraum (E1) angehören.

**7.** Verfahren zur Beobachtung einer Probe (10) mithilfe einer Vorrichtung (1) nach einem der vorhergehenden Ansprüche, wobei das Verfahren umfasst:

- Anordnen der Probe (10) auf dem Träger ($10_s$);
- Beleuchten der Probe mithilfe der Lichtquelle (11);
- Erfassen eines Bildes (I) durch den Bildsensor (20);
- ausgehend von dem erfassten Bild (I), Bilden eines ersten Bildes ($I_1$) der Probe mithilfe der ersten Gruppe von Pixeln ($20_1$) und Bilden eines zweiten Bildes der Probe ($I_2$) mithilfe der zweiten Gruppe von Pixeln ($20_2$);
so dass
- das erste Bild ($I_1$) die Probe gemäß der ersten Vergrößerung ($G_1$), die durch das erste optische System ($16_1$) definiert wird, darstellt;
- das zweite Bild ($I_2$) die Probe gemäß der zweiten Vergrößerung ($G_2$), die durch das zweite optische System ($16_2$) definiert wird, darstellt.

**8.** Verfahren nach Anspruch 7, wobei:

- das erste optische System ($16_1$) eine erste Objektebene ($P_{o,1}$) und eine erste Bildebene ($P_{i,1}$) definiert und wobei sich die Probe (10) gemäß einer Probenebene ($P_{10}$) erstreckt;
- der Bildsensor (20) eine Detektionsebene ($P_{20}$) definiert;
wobei das Verfahren dergestalt ist, dass:

- die Probenebene ($P_{10}$) in Bezug auf die erste Objektebene ($P_{o,1}$) um einen ersten Objekt-Defokussierungsabstand von weniger als 1 mm versetzt ist;
- und/oder die Detektionsebene ($P_{20}$) in Bezug auf die erste Bildebene ($P_{i,1}$) um einen ersten Bild-Defokussierungsabstand von weniger als 1 mm versetzt ist;

so dass das erste Bild ($I_1$) ein defokussiertes Bild der Probe ist.

**9.** Verfahren nach Anspruch 8, umfassend ferner eine Rekonstruktion eines komplexen Bildes ($I_1^*$) der ersten Komponente ($14_1$) ausgehend von dem ersten defokussierten Bild.

**10.** Verfahren nach einem der Ansprüche 7 bis 9, wobei:

- das zweite optische System ($16_2$) eine zweite Objektebene ($P_{o,2}$) und eine zweite Bildebene ($P_{i,2}$) definiert und wobei sich die Probe gemäß einer Probenebene ($P_{10}$) erstreckt;
- der Bildsensor (20) eine Detektionsebene ($P_{20}$) definiert;
wobei das Verfahren dergestalt ist, dass:

- die Probenebene ($P_{10}$) in Bezug auf die zweite Objektebene ($P_{o,2}$) um einen zweiten Objekt-Defokussierungsabstand von weniger als 1 mm versetzt ist;
- und/oder die Detektionsebene ($P_{20}$) in Bezug auf die zweite Bildebene ($P_{i,2}$) um einen zweiten Bild-Defokussierungsabstand von weniger als 1 mm versetzt ist;

so dass das zweite Bild ($I_2$) ein defokussiertes Bild der Probe ist.

**11.** Verfahren nach Anspruch 10, umfassend ferner eine Rekonstruktion eines komplexen Bildes ($I_2^*$) der zweiten Komponente ($14_2$) ausgehend von dem zweiten defokussierten Bild.

**12.** Verfahren nach einem der Ansprüche 7 bis 11, wobei die Lichtquelle (11) gleichzeitig eine einfallende Lichtwelle (12) in dem ersten Spektralband ($\Delta_1$) und in dem zweiten Spektralband ($\Delta_2$) emittiert, so dass das erste Bild ($I_1$) und das zweite Bild ($I_2$) gleichzeitig ausgehend von einem selben von dem Bildsensor erfassten Bild (I) gebildet werden.

**13.** Verfahren nach einem der Ansprüche 7 bis 11, wobei die Lichtquelle (11) nacheinander eine einfallende Lichtwelle (12) in dem ersten Spektralband ($\Delta_1$) und in dem zweiten Spektralband ($\Delta_2$) emittiert, so dass das erste Bild ($I_1$) und das zweite Bild ($I_2$) nacheinander ausgehend von zwei nacheinander von dem Bildsensor erfassten Bildern (I) gebildet werden.

**Claims**

**1.** Device (1) for observing a sample (10), comprising:

• a light source (11) configured to emit an incident light wave (12) in a first spectral band ($\Delta_1$) and in a second spectral band ($\Delta_2$), the first spectral band being different from the second spectral band;
• an image sensor (20) comprising a first group of pixels ($20_1$), which are sensitive to the first spectral band, and a second group of pixels ($20_2$), which are sensitive to the second spectral band;
• a holder (10s) configured to hold the sample in a holder plane ($P_s$), the holder plane lying between the light source (11) and the image sensor (20), such that when the sample is held by the holder, under the effect of an illumination by the incident light wave (12), a light wave of interest (14) propagates to the image sensor, said wave of interest being the result of the propagation of the incident light wave through the sample or of reflection of the incident light (12) by the sample;
• a first splitter (13), placed between the holder plane ($P_s$) and the image sensor (20), so as:

- to transmit a first component ($14_1$) of the light wave of interest through a first optical channel ($C_1$), the first optical channel extending to a second splitter (17);
- to reflect a second component ($14_2$) of the light wave of interest to a second optical channel ($C_2$) that is different from the first optical channel, the second optical channel extending to the second splitter (17);

• a first filter ($15_1$) and a second filter ($15_2$), which are placed downstream of the first splitter (13) in order to filter the first component ($14_1$) in the first spectral band ($\Delta_1$) and the second component ($14_2$) in the second spectral band ($\Delta_2$), respectively;
the device also comprising:

• a first optical system ($16_1$), which defines a first magnification ($G_1$) and which at least partially lies in the first optical channel ($C_1$), and a second optical system ($16_2$), which defines a second magnification ($G_2$) and which at least partially lies in the second optical channel ($C_2$), the first optical system comprising an optical component, in the first optical channel, between the first splitter and the second splitter, and the second optical system comprising an optical component, in the second optical channel, between the first splitter and the second splitter;
• the second splitter (17) being placed between the first splitter (13) and the image sensor (20), and arranged so as to recombine the first component ($14_1$) and the second component ($14_2$), such that downstream of the second splitter, the first component ($14_1$) and the second component ($14_2$) propagate to the image sensor (20) parallel to one and the same propagation axis (Z);

the device being such that the first magnification ($G_1$) is strictly higher or strictly lower than the second magnification ($G_2$).

2. Device according to Claim 1, comprising a processing unit (22) programmed to form:

- a first image ($I_1$) from the first group of pixels ($20_1$);
- a second image ($I_2$) from the second group of pixels ($20_2$).

3. Device according to any one of the preceding claims, comprising an infinity corrected objective ($16_a$) placed between the holder plane ($P_S$) and the first splitter (13), and:

- a first tube lens ($16_b$) lying in the first optical channel ($C_1$), the first tube lens forming, with the objective ($16_a$), the first optical system ($16_1$);
- a second tube lens ($16_c$) lying in the second optical channel ($C_2$), the second tube lens forming, with the objective ($16_a$), the second optical system ($16_2$).

4. Device according to any one of the preceding claims, wherein the first splitter (13) comprises a half-silvered mirror and/or wherein the second splitter (17) comprises a half-silvered mirror.

5. Device according to any one of the preceding claims, wherein the second optical channel ($C_2$) comprises mirrors (18), so as to direct the second component ($14_2$), i.e. the component reflected by the first splitter (13), to the second splitter (17).

6. Device according to any one of the preceding claims, wherein the holder plane ($P_s$) defines two half-spaces (E1, E2), such that:

- the light source (11) and the image sensor (20) belong to two different sub-spaces, respectively;
- or the light source (11) and the image sensor (20) belong to the same sub-space (E1).

7. Method for observing a sample (10) using a device (1) according to the subject matter of any one of the preceding claims, the method comprising:

- placing the sample (10) on the holder ($10_s$);
- illuminating the sample using the light source (11);
- acquiring an image (I) with the image sensor (20);
- from the acquired image (I), forming a first image ($I_1$) of the sample using the first group of pixels ($20_1$), and forming a second image of the sample ($I_2$) using the second group of pixels ($20_2$);
such that
- the first image ($I_1$) shows the sample at the first

magnification ($G_1$) defined by the first optical system ($16_1$);

- the second image ($I_2$) shows the sample at the second magnification ($G_2$) defined by the second optical system ($16_2$).

8. Method according to Claim 7, wherein:

- the first optical system ($16_1$) defines a first object plane ($P_{o,1}$) and a first image plane ($P_{i,1}$), and wherein the sample (10) lies in a sample plane ($P_{10}$);
- the image sensor (20) defines a detection plane ($P_{20}$);

the method being such that:

- the sample plane ($P_{10}$) is offset with respect to the first object plane ($P_{o,1}$) by a first object defocus distance smaller than 1 mm;
- and/or the detection plane ($P_{20}$) is offset with respect to the first image plane ($P_{i,1}$) by a first image defocus distance smaller than 1 mm;

such that the first image ($I_1$) is a defocused image of the sample.

9. Method according to Claim 8, also comprising reconstructing a complex image ($I_1^*$) of the first component ($14_1$) from the defocused first image.

10. Method according to any one of Claims 7 to 9, wherein:

- the second optical system ($16_2$) defines a second object plane ($P_{o,2}$) and a second image plane ($P_{i,2}$), and wherein the sample lies in a sample plane ($P_{10}$);
- the image sensor (20) defines a detection plane ($P_{20}$);

the method being such that:

- the sample plane ($P_{10}$) is offset with respect to the second object plane ($P_{O,2}$) by a second object defocus distance smaller than 1 mm;
- and/or the detection plane ($P_{20}$) is offset with respect to the second image plane ($P_{i,2}$) by a second image defocus distance smaller than 1 mm;

such that the second image ($I_2$) is a defocused image of the sample.

11. Method according to Claim 10, also comprising reconstructing a complex image ($I_2^*$) of the second component ($14_2$) from the defocused second image.

12. Method according to any one of Claims 7 to 11, wherein the light source (11) simultaneously emits an incident light wave (12) in the first spectral band ($\Delta_1$) and in the second spectral band ($\Delta_2$), such that the first image ($I_1$) and the second image ($I_2$) are formed simultaneously from one and the same image (I) acquired by the image sensor.

13. Method according to any one of Claims 7 to 11, wherein the light source (11) successively emits an incident light wave (12) in the first spectral band ($\Delta_1$) and in the second spectral band ($\Delta_2$), such that the first image ($I_1$) and the second image ($I_2$) are formed successively from two images (I) successively acquired by the image sensor.

**Fig. 1A**

**Fig. 1B**

**Fig. 1C**

1

11

10

$P_S$

$P_{10}, P_{o,1}, P_{o,2}$

10s

10s

$16_2$

$15_2$

18

$16_a$

X

Z

13

$16_1$

$15_1$

$16_c$

C2

C1

$16_b$

17

18

24

$P_{20}$

$P_{i,1} P_{i,2}$

20

22

23

**Fig. 1D**

$20_1$

$20_2$

20

**Fig. 1E**

Fig. 2A

Fig. 2B

Fig. 2C

**Fig. 3A**

**Fig. 3B**

**Fig. 3C**

**Fig. 3D**

**RÉFÉRENCES CITÉES DANS LA DESCRIPTION**

**Documents brevets cités dans la description**

- WO 2017115048 A
- WO 2018060619 A
- US 20180329195 A
- WO 2017162985 A
- WO 2014021031 A